# EUROPÄISCHE PATENTSCHRIFT

(11) **EP 1 031 743 B1**
(45) Veröffentlichungstag und Bekanntmachung des Hinweises auf die Patenterteilung: **26.10.2005**
(21) Anmeldenummer: 00103562.5
(22) Anmeldetag: 19.02.2000
(51) Int. Cl.: F16B 39/10

(54) **Sicherungsvorrichtung für eine Schraube oder eine Schraubenmutter**
Locking device for a screw or a nut
Dispositif de blocage d'une vis ou d'un écrou

(30) Priorität: 25.02.1999 DE 19908134
(43) Veröffentlichungstag der Anmeldung: 30.08.2000
(73) Patentinhaber: Alstom Technology Ltd, 5400 Baden (CH)
(72) Erfinder: Erb, Bernhard, 3754 Diemtigen (CH)

(56) Entgegenhaltungen:
- DE-A- 2 603 732
- US-A- 2 472 394

## Beschreibung

### Technisches Gebiet

Die Erfindung bezieht sich auf das Gebiet der Befestigungstechnik. Sie geht aus von einer Sicherungsvorrichtung für eine Schraube oder eine Schraubenmutter gemäss dem Oberbegriff des unabhängigen Anspruchs.

### Stand der Technik

Das Lockern und Lösen von Schrauben oder Schraubenmuttern beispielsweise an Maschinen während des Betriebes der Maschine wird durch Vorrichtungen zur Sicherung der Schrauben oder Schraubenmuttern verhindert.

Aus US 2472394 ist eine Sicherungsvorrichtung für eine Schraube bekannt, welche eine Aufnahmeeinrichtung für einen Schraubenkopf oder eine Schraubenmutter sowie einen damit verbundenen Ansatz zur Fixierung der Vorrichtung auf einem Bauteil aufweist. Der Ansatz ist mit einem Ansatzende ausgerüstet, welches wenigstens eine verformbare Lasche aufweist, die zum Zwecke der Fixierung um eine Kante des Bauteils herumbiegbar ist.

Diese Art der Schraubensicherung ist nur für Anwendungsfälle mit ruhender und vergleichsweise geringer Belastung geeignet. Für Anwendungsfälle mit ständig wechselnden oder starken Vibrationsbeanspruchungen, wie sie beispielsweise für Maschinen mit rotierenden Maschinenelementen typisch sind, sind derartige Vorrichtungen jedoch nicht geeignet.

Gängige Vorrichtungen zur Sicherung von Schrauben oder Schraubenmuttern an Maschinen werden in "Roloff/Matek Maschinenelemente, 9. Auflage, Vieweg Verlag, 1984, S. 193ff offenbart. Beispielsweise werden darin für starke Vibrationsbeanspruchungen von Schrauben oder Schraubenmuttern, wie sie bei Maschinen auftreten können, Drahtsicherungen eingesetzt, die die zu sichernde Schraube oder Schraubenmutter durch einen Draht mit Teilen der Maschine verbindet und so gegen Lockern und Lösen sichert. Aufwendig und teuer ist jedoch die Anbringung des einzusetzenden Drahtes, insbesondere bei komplizierten Befestigungen und schwer zugänglichen Befestigungsanordnungen.

Eine andere Möglichkeit, Schrauben oder Schraubenmuttern gegen Lockern und Lösen zu sichern, die in "Roloff/Matek Maschinenelemente, 9. Auflage, Vieweg Verlag 1984, S. 193 ff." genannt wird, ist das Verschweissen von Schraube zu Schraubenmutter beziehungsweise von Schraube oder Schraubenmutter zu einem Bauteil der Maschine. Um diese Art von Sicherung von Schrauben oder Schraubenmuttern zu lösen, ist es notwendig, die Schweissstellen abzuschleifen. Dadurch werden umliegende Bauteile durch Schleifstaub verunreinigt, beschädigt oder gar zerstört. Des weiteren werden die Schrauben, die Schraubenköpfe oder die Schraubenmuttern beschädigt, was bei eingesetzten teueren Schrauben aus hochwertigem Material erhebliche Kosten verursacht. Hinzu kommt, dass solche Schleifarbeiten sehr aufwendig sind, insbesondere, wenn die oft erhebliche Anzahl der zu entsichernden Schrauben und Schraubenmuttern berücksichtigt wird.

### Darstellung der Erfindung

Es ist deshalb die Aufgabe der Erfindung, eine Sicherungsvorrichtung für eine Schraube oder eine Schraubenmutter anzugeben, welche in besonders einfacher Weise angebracht werden kann und sehr leicht und mit geringem Aufwand lösbar ist, ohne dass wesentliche Verschmutzungen auftreten. Diese Aufgabe wird durch die Merkmale des unabhängigen Anspruches gelöst. Weitere vorteilhafte Ausgestaltungen der Erfindung sind in den Unteransprüchen angegeben.

Die erfindungsgemässe Sicherungsvorrichtung ist scheibenförmig ausgeführt und weist eine Aufnahmeeinrichtung zur Aufnahme einer zu sichernden Schraube oder Schraubenmutter auf. Des weiteren umfasst die Aufnahmeeinrichtung mindestens einen Ansatz, dessen Ende im Gebrauchszustand mit einem Bauteil einer Maschine beispielsweise verschweisst oder verklebt ist. Dieser entsprechende Ansatz weist eine als Sollbruchstelle ausgebildete Trennstelle auf, die nicht im Drehbereich der Schraubenmutter oder des Schraubenkopfes liegt. Durch einfaches Meisseln, Trennschneiden, Schleifen oder Schneidbrennen dieser Trennstelle lässt sich das verschweisste oder verklebte Ende des Ansatzes vorteilhaft nahezu verschmutzungsfrei und sehr leicht und schnell vom restlichen Teil des Ansatzes trennen und somit die Sicherungsvorrichtung entfernen. Zudem wird so keine Schraube oder Schraubenmutter beschädigt oder zerstört, da ein Abrunden der Kanten des Schraubenkopfes der Schraube oder der Schraubenmutter durch Drehen verhindert wird. Ausführungsformen der Sicherungsvorrichtung weisen mehrere Ansätze auf, die radial in der Ebene der Aufnahmeeinrichtung oder in einem beliebigen Winkel zu der Aufnahmeeinrichtung angeordnet sind. Solche Ansätze ermöglichen es, die Sicherungsvorrichtung an ein Bauteil, insbesondere an ein Bauteil einer Maschine, das schwer zugänglich ist, durch Verschweissen oder Verkleben der Ansätze anzubringen und zu fixieren. Mit Hilfe dieser Ausflihrungsformen der Ansätze der erfindungsgemässen Sicherungsvorrichtung ist es möglich, Schrauben oder Schraubenmuttern in flexibler Weise und nach beliebig vorgegebenen räumlichen Anforderungen zu sichern und gegebenenfalls wieder sehr einfach zu entfernen.

### Kurze Beschreibung der Zeichnung

Nachfolgend wird die Erfindung anhand von Ausführungsbeispielen im Zusammenhang mit der Zeichnung näher erläutert.

Es zeigen
- **Fig. 1a**: ein Ausführungsbeispiel einer Sicherungsvorrichtung in der Draufsicht mit einem radial in der Ebene der Aufnahmeeinrichtung angeordneten Ansatz,
- **Fig. 1b**: eine Darstellung des Ausführungsbeispiels der Sicherungsvorrichtung nach Fig.1a in der Vorderansicht,
- **Fig. 2**: ein weiteres Ausführungsbeispiel einer Sicherungsvorrichtung in der Vorderan- sicht mit zwei in beliebigem Winkel zur Aufnahmeeinrichtung angeordneten An- sätzen.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

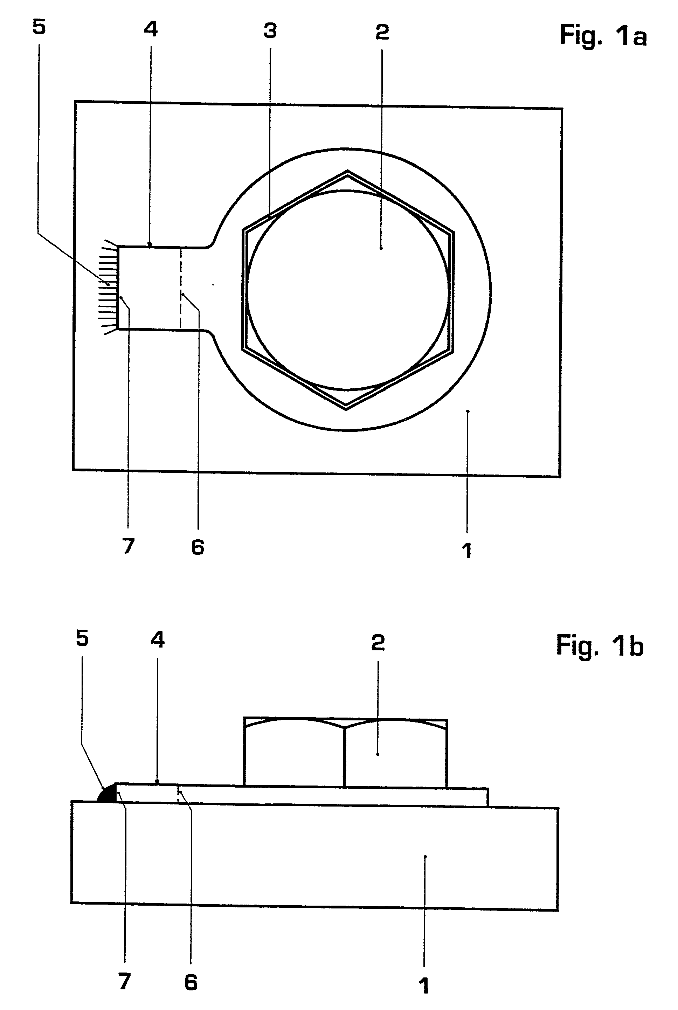

In Fig. 1a ist ein erfindungsgemässes Ausführungsbeispiel der Sicherungsvorrichtung einer Schraube oder Schraubenmutter in der Draufsicht dargestellt. Die Sicherungsvorrichtung ist scheibenförmig aufgebaut und umfasst eine Aufnahmeeinrichtung 3 zur Aufnahme eines Schraubenkopfes einer Schraube 2 oder einer Schraubenmutter. Im Ausfuhrungsbeispiel gemäss Fig. 1 a ist diese Aufnahmeeinrichtung 3 mit einem Innensechskant versehen und umschliesst bündig einen Schraubenkopf einer gängigen sechskantigen Schraube 2. Mit Hilfe der Aufnahmeeinrichtung 3 lässt sich somit die Sicherungsvorrichtung schnell und problemlos an die zu sichernde Schraube 2 oder Schraubenmutter anbringen und ein formschlüssiges Sichern der Schraube 2 oder der Schraubenmutter ist möglich.

Die Sicherungsvorrichtung weisst an der Aufnahmeeinrichtung 3 mindestens einen Ansatz 4 auf, der mit der Aufnahmeeinrichtung 3 verbunden ist. Der Ansatz 4 schliesst mit einem Ansatzende 7 ab, das verschweissbar und/oder verklebbar ist. Mittels dieses verschweissbaren oder verkleb baren Ansatzendes 7 ist die Sicherungsvorrichtung gemäss Fig. la über eine Schweiss- oder Klebeverbindung 5 an einem Bauteill fixiert. Dabei ist das Material des Ansatzendes 7 auf das Grundmaterial des Bauteils 1 abzustimmen, damit das Schweissen und/oder Verkleben einfacher wird und eine Rissbildung vermieden wird. Das Ansatzende 7 liegt vorteilhafterweise nicht im Drehbereich des zu sichernden Schraubenkopfes der Schraube 2 oder der Schraubenmutter, da ansonsten der Schraubenkopf der Schraube 2 oder die Schraubenmutter durch die Fixierung der Sicherungsvorrichtung mittels Schweissen und/oder Verkleben beschädigt werden würde.

Der Ansatz 4 umfasst zudem eine als Sollbruchstelle ausgebildete Trennstelle 6, die durch Meisseln trennbar ist. Es ist aber auch durchaus denkbar, dass die Trennstelle 6 durch Schleifen, Trennschneiden oder Scneidbrennen getrennt werden kann. Diese Trennstelle 6 ist so am Ansatz 4 angeordnet, dass sie nicht im Drehbereich der Schraubenmutter oder des Schraubenkopfes der Schraube 2 liegt. Dadurch wird erreicht, dass die zu sichernde Schraube 2 beim Trennen des verklebten und/oder verschweissten Ansatzendes 7 vom übringen Ansatz 4 nicht beschädigt oder zerstört wird, da ein Abrunden der Kanten des Schraubenkopfes der Schraube 2 oder der Schraubenmutter durch Drehen verhindert wird.

Der Ansatz 4 der Sicherungsvorrichtung gemäss Fig. la ist radial in der Ebene der Aufnahmeeinrichtung 3 angeordnet. Eine solche Ausgestaltung des Ansatzes 4 ist besonders geeignet für eine Fixierung der Sicherungsvorrichtung an planen Flächen von Bauteilen durch Verschweissen oder Verkleben des Ansatzeendes 7 mit dem Bauteill, wie Fig. 1 b in der V order ansicht zeigt. Jedoch kann die Sicherungsvorrichtung vorteilhaft auch mehrere Ansätze aufweisen, die beim Anbringen der Sicherungsvorrichtung nicht alle zur Fixierung der Sicherungsvorrichtung genutzt werden. Dadurch wird erreicht, dass ein und dieselbe Sicherungsvorrichtung mehrmals eingesetzt werden kann. Zusätzlich sind trapezf6rmige, dreieckf6rmige, bananenförmige usw. Ansätze denkbar, die je nach Anforderungen an das Bauteil auszuwählen sind.

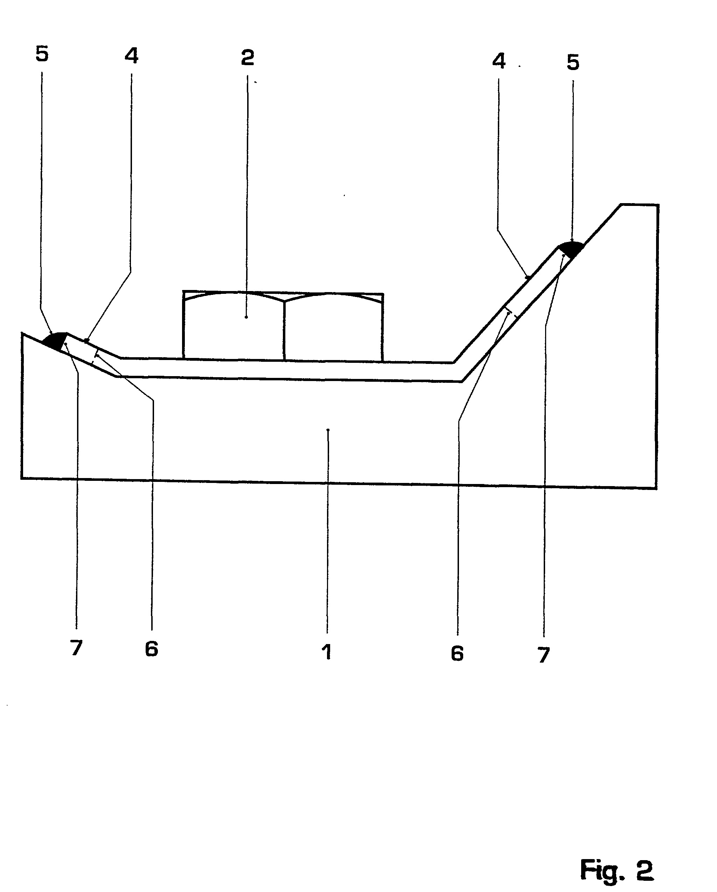

Ein weiteres Ausführungsbeispiel ist in Fig. 2 dargestellt. Darin ist die Sicherungsvorrichtung mit zwei Ansätzen 4 ausgeführt, wobei jeder Ansatz 4 in einem beliebigen Winkel zur Aufnahmeeinrichtung 3 angeordnet ist. Diese in Fig. 2 gezeigte Ausführungsform der Sicherungsvorrichtung eignet sich ganz besonders für ein Bauteil 1, bei dem die zu sichernde Schraube 2 oder Schraubenmutter an einer schwer zugänglichen Stelle angeordnet ist. Durch den beliebigen Winkel der Ansätze 4 zur Aufnahmeeinrichtung 3 ist es deshalb möglich, dass sich die Sicherungsvorrichtung in flexibler Weise den räumlichen Anforderungen anpassen lässt und somit das Anbringen und insbesondere das Entfernen nur einen sehr geringen Auf wand bedingt.

Weitere nicht dargestellte Ausführungsbeispiele sind ebenso denkbar, in denen die Aufnahmeeinrichtung 3 anstelle einer gängigen Schraube 2 eine Schraubenmutter umschliesst. Desweiteren ist eine nicht dargestellte Aufnahmeeinrichtung vorstellbar, die einen Innen-n-Kant zur Aufnahme eines n-kantigen Schraubenkopfes oder einer n-kantigen Schraubenmutter aufweist oder aber eine nicht dargestellte Aufnahmeeinrichtung, die einen Aussen-n-Kant zur Aufnahme beispielsweise einer gängigen Innenkantschraube aufweist.

### Bezugszeichenliste

- 1: Bauteil
- 2: Schraube
- 3: Aufnahmeeinrichtung
- 4: Ansatz
- 5: Schweiss- oder Klebeverbindung
- 6: Trennstelle
- 7: Ansatzende

## Patentansprüche

1. Sicherungsvorrichtung für eine Schraube oder Schraubenmutter, wobei die Sicherungsvorrichtung scheibenförmig ausgeführt und mit einer Aufnahmeeinrichtung (3) zur Aufnahme des Schraubenkopfes der Schraube (2) oder der Schraubenmutter sowie mit mindestens einem Ansatz (4) zur Fixierung an einem Bauteil (1) versehen ist,
**dadurch gekennzeichnet,**
**dass** der mindestens eine Ansatz (4) ein Ansatzende (7) und eine als Sollbruchstelle ausgebildete Trennstelle (6) aufweist,
**dass** das Ansatzende (7) im Gebrauchszustand am Bauteil (1) fixiert ist, und
**dass** die Trennstelle (6) zwischen Aufnahmeeinrichtung (3) und Ansatzende (7) ausserhalb des Drehbereichs des Schraubenkopfes der Schraube (2) oder der Schraubenmutter angeordnet ist.

2. Sicherungsvorrichtung nach Anspruch 1, **dadurch gekennzeichnet, dass** die Trennstelle (6) durch Meisseln, Trennschneiden, Schleifen oder Schneidbrennen trennbar ist.

3. Sicherungsvorrichtung nach Anspruch 1, **dadurch gekennzeichnet, dass** der Ansatz (4) radial in der Ebene der Aufnahmeeinrichtung (3) angeordnet ist.

4. Sicherungsvorrichtung nach Anspruch 1, **dadurch gekennzeichnet, dass** der Ansatz (4) in einem beliebigen Winkel zur Aufnahmeeinrichtung (3) angeordnet ist.

5. Sicherungsvorrichtung nach einem der Ansprüche 1 bis 4, **dadurch gekennzeichnet, dass** das Ansatzende (7) im Gebrauchzustand auf dem Bauteil (1) verklebt und/oder verschweisst ist.

6. Sicherungsvorrichtung nach einem der Ansprüche 1 bis 5, **dadurch gekennzeichnet, dass** die Aufnahmeeinrichtung (3) einen Aussen-n-Kant oder einen Innen-n-Kant umfasst.

## Claims

1. Securing fixture for a screw or nut, the securing fixture being of disc-like design and being provided with a holding device (3) for holding the head of the screw (2) or the nut and with at least one projection (4) for fixing to a component (1), **characterized in that** the at least one projection (4) has a projection end (7) and a parting location (6) designed as a predetermined breaking location, **in that** the projection end (7) is fixed to the component (1) in the use state, and **in that** the parting location (6) is arranged between the holding device (3) and projection end (7), outside the rotation range of the screw head of the screw (2) or the nut.

2. Securing fixture according to Claim 1, **characterized in that** the parting location (6) can be parted by means of a chisel, by cutting, by grinding or by flame cutting.

3. Securing fixture according to Claim 1, **characterized in that** the projection (4) is arranged radially in the plane of the holding device (3).

4. Securing fixture according to Claim 1, **characterized in that** the projection (4) is arranged at any desired angle to the holding device (3).

5. Securing fixture according to one of Claims 1 to 4, **characterized in that** the projection end is adhesively bonded and/or welded to the component (1) in the use state.

6. Securing fixture according to one of Claims 1 to 5, **characterized in that** the holding device (3) comprises a polygon head or a polygon socket.

## Revendications

1. Dispositif de blocage de sûreté pour une vis ou un écrou de vis, du type selon lequel le dispositif de blocage de sûreté est réalisé en forme de disque et est muni d'un organe formant logement (3) destiné à recevoir la tête de la vis (2) ou l'écrou de vis, ainsi que d'au moins une pièce rapportée (4) destinée à la fixation en position à un élément constitutif de machine (1),
**caractérisé**
**en ce que** l'une au moins des pièces rapportées (4) présente une extrémité de pièce rapportée (7) et un emplacement de séparation (6) conformé en tant qu'emplacement d'amorce de rupture,
**en ce que** l'extrémité de pièce rapportée (7) est fixée dans les conditions d'utilisation à l'élément constitutif de machine (1), et
**en ce que** l'emplacement de séparation (6) entre l'organe formant logement (3) et l'extrémité de pièce rapportée (7) est disposé à l'extérieur de la zone de rotation de la tête de la vis (2) ou de l'écrou de vis.

2. Dispositif de blocage de sûreté selon la revendication 1, **caractérisé en ce que** l'emplacement de séparation (6) est susceptible d'être séparé par travail au burin, à l'outillage de coupe, de rectification ou de découpe thermique.

3. Dispositif de blocage de sûreté selon la revendication 1, **caractérisé en ce que** la pièce rapportée (4) est en disposition radiale dans le plan de l'organe formant logement (3).

4. Dispositif de blocage de sûreté selon la revendication 1, **caractérisé en ce que** la pièce rapportée (4) est disposée selon un angle quelconque par rapport à l'organe formant logement (3).

5. Dispositif de blocage de sûreté selon l'une des revendications 1 à 4, **caractérisé en ce que** l'extrémité de pièce rapportée (7) est, dans les conditions d'utilisation, solidarisée à l'élément constitutif de machine (1) par soudage ou collage.

6. Dispositif de blocage de sûreté selon l'une des revendications 1 à 5, **caractérisé en ce que** l'organe formant logement (3) comprend un profil externe à n pans ou un évidement à n pans creux.
